# EUROPEAN PATENT APPLICATION

(11) **EP 4 779 761 A1**
(43) Date of publication of application: **22.07.2026**
(21) Application number: 24877549.6
(22) Date of filing: 11.10.2024
(51) Int. Cl.: H01M 10/657, H05B 6/36, H01M 10/615, H01M 10/63

(54) **HEATING APPARATUS**

(30) Priority: 12.10.2023 KR 20230136104
(71) Applicant: LG Electronics Inc., Yeongdeungpo-gu Seoul 07336 (KR)
(72) Inventor: KIM, Jeongwon, Seoul 06772 (KR); OH, Bukuk, Seoul 06772 (KR); SHIN, Jinsoo, Seoul 06772 (KR); HAN, Moonki, Seoul 06772 (KR); SONG, Jaewon, Seoul 06772 (KR); KIM, Yoonhyun, Seoul 06772 (KR)
(74) Representative: Schott, Jakob Valentin
(86) International application number: PCT/KR2024/015393
(87) International publication number: WO 2025/080014

(57) **Abstract**

The present specification relates to an embodiment of a heating apparatus which divides, into a plurality of heating zones, a target part to be heated of an object to be heated, and which forms each of an upper heating device and a lower heating device as a plurality of heating modules, and thus heats each of the plurality of heating zones with the plurality of heating modules.

## Description

### Technical Field

The present disclosure relates to a heating apparatus for heating a battery cell.

### Background Art

The technology underlying the present disclosure relates to the induction heating of a battery cell.

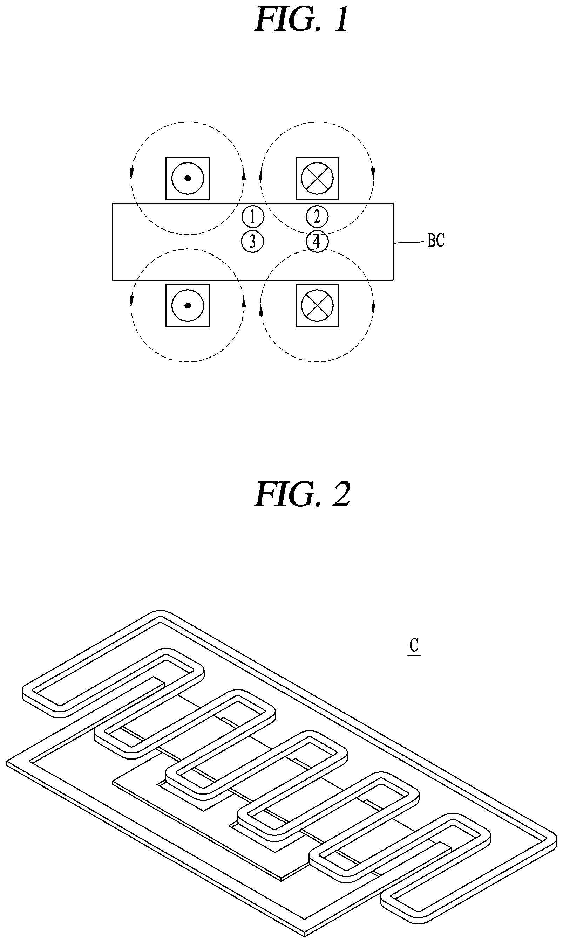

A conventional apparatus for induction heating a battery cell is configured such that, as shown in FIG. 1, a heating module including an induction coil C as shown in FIG. 2 is arranged above and below a battery cell BC, respectively, and when magnetic field lines generated from the heating module are applied to the battery cell BC, the battery cell BC is heated by the magnetic field lines.

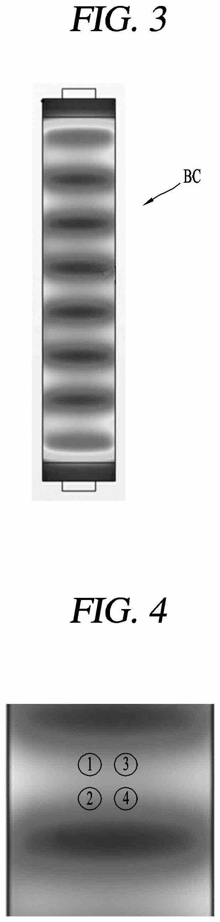

However, in this method, due to a structure of the coil, it is difficult to transmit balanced magnetic field lines throughout an entire battery cell, and as shown in FIG. 3, a heating surface temperature of the battery cell BC is unbalanced, and as a result, a heating rate of a portion without the coil is inevitably slower than that of a portion with the coil.

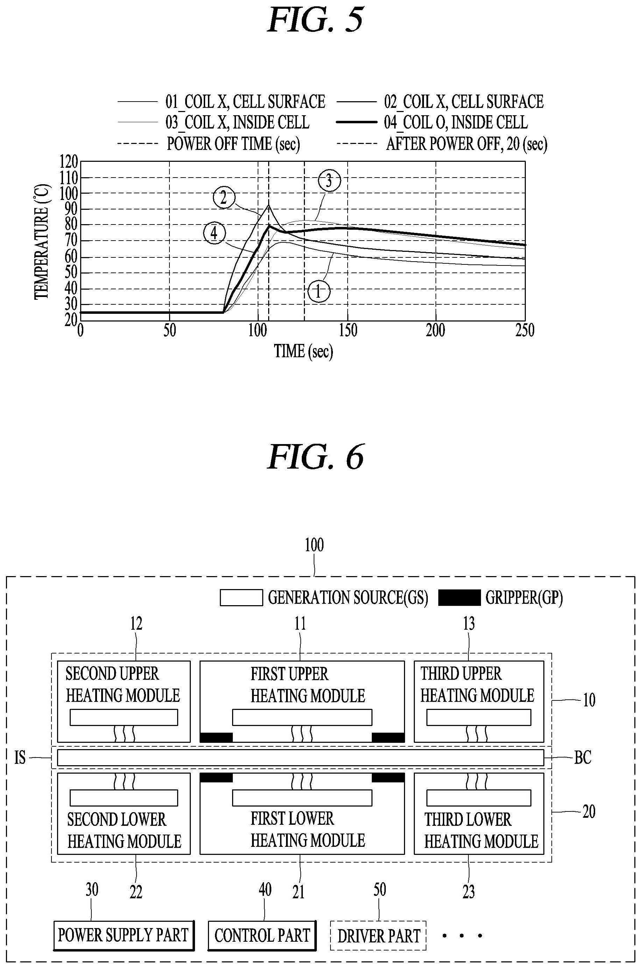

FIG. 4 is a graph showing a heating surface of a battery cell corresponding to regions 1 to 4 of FIG. 1, and FIG. 5 is a graph showing a temperature change in regions 1 to 4 of FIG. 4, in which a temperature of regions 1 and 3 rises as a temperature heated in regions 2 and 4 is conducted in FIG. 4, and it can be seen that a heating rate in regions 1 and 3 is significantly slower than that in regions 2 and 4 as shown in FIG. 5.

In addition, the conventional heating apparatus has limitations not only in a distribution of magnetic field lines due to the foregoing coil structure, but also in a difficulty of heating battery cells with various sizes.

Besides, when a tab is formed on a battery cell, even if the tab is positioned within a range of magnetic field line distribution, a concentrated heating phenomenon due to a magnetic force can occur at a tab portion, thereby having a risk of discoloring or damaging the tab portion.

That is, in the conventional heating apparatus, it is difficult to perform balanced heating across the entire battery cell due to the coil structure, and it is difficult to perform appropriate heating according to a size of the battery cell, thereby having a limitation in that efficient heating cannot be achieved.

### Disclosure of Invention

### Technical Problem

An aspect of the present disclosure is intended to improve the foregoing limitations of the related art.

Accordingly, this specification is intended to provide an embodiment that can uniformly heat an object to be heated.

In addition, this specification is intended to provide an embodiment that can appropriately heat an object to be heated according to its heating state.

Besides, this specification is intended to provide an embodiment in which heating can be performed on objects with various sizes to be heated.

Moreover, this specification is intended to provide an embodiment in which a gripper can be formed of a metallic material to form a thin thickness.

### Solution to Problem

In order to solve the foregoing problems, as a solution means, the present disclosure can divide a heating target portion of an object to be heated into a plurality of heating zones, and configure each of upper and lower heating apparatuses into a plurality of heating modules to perform heating for each of the plurality of heating zones using the plurality of heating modules.

Specifically, the heating zone can be divided into at least three portions, such as a central portion, one side portion, and the other side portion, and heating modules can be arranged above and below each heating zone to perform heating for each heating zone.

Here, when each heating module is an induction heating module, an induction coil included in each heating module can be formed with a spiral structure.

In this case, the spiral structure can refer to a flat spiral structure.

In addition, the driving can be controlled for each of the plurality of heating modules.

For example, one or more of a current intensity, a use frequency, and a heating time period applied to the heating module can be controlled differently for each heating zone.

The above technical features can be implemented in a heating apparatus, heating system, heating method, heating equipment, and the like, and this specification is intended to provide an embodiment of a heating apparatus using the technical features as a means of solving the problem.

An embodiment of the heating apparatus can include an upper heating part and a lower heating part arranged above and below an arrangement section where an object to be heated is arranged, respectively, to transfer a heating source serving as a basis for heating to the object to be heated, a power supply part that supplies driving power serving as a basis for generating the heating source to each of the upper heating part and the lower heating part, and a control part that controls the supply of the driving power to control the driving of each of the upper heating part and the lower heating part, wherein each of the upper heating part and the lower heating part includes a plurality of heating modules to heat each of the plurality of heating zones in which a heating target portion of the object to be heated is divided into a plurality of zones.

More specifically, the upper heating part can include a first upper heating module that transfers the heating source from a top of a central portion including a longitudinal center of the arrangement section, a second upper heating module that transfers the heating source from a top of one side portion corresponding to one side of the central portion, and a third upper heating module that transfers the heating source from a top of the other side portion corresponding to the other side of the central portion, and the lower heating part can include a first lower heating module that transfers the heating source from a bottom of the central portion, a second lower heating module that transfers the heating source from a bottom of the one side portion, and a third lower heating module that transfers the heating source from a bottom of the other side portion.

In an embodiment, one or more of the first upper heating module and the first lower heating module can include one or more grippers that fix the object to be heated arranged in the arrangement section.

In an embodiment, the gripper can be made of a non-metallic or metallic material.

In an embodiment, the gripper, when formed of the non-metallic material, can be formed with a thickness within a reference thickness, and the gripper, when formed of the metallic material, can be formed with a thickness less than the reference thickness.

In an embodiment, the first upper heating module and the first lower heating module can be symmetrical to each other with respect to the central portion.

In an embodiment, the first upper heating module and the first lower heating module can be arranged above and below the central portion, respectively, with the same spacing from the object to be heated.

In an embodiment, the second upper heating module and the second lower heating module can be symmetrical to each other with respect to the one side portion.

In an embodiment the second upper heating module and the second lower heating module can be arranged above and below the one side portion, respectively, with the same spacing from the object to be heated.

In an embodiment, the third upper heating module and the third lower heating module can be symmetrical to each other with respect to the other side portion.

In an embodiment, the third upper heating module and the third lower heating module can be arranged above and below the other side portion, respectively, with the same spacing from the object to be heated.

In an embodiment, the first upper heating module, the second upper heating module, and the third upper heating module can be arranged above the arrangement section with the same spacing from the object to be heated.

In an embodiment, the first lower heating module, the second lower heating module, and the third lower heating module can be arranged below the arrangement section with the same spacing from the object to be heated.

In an embodiment, the second upper heating module and the third upper heating module can be respectively arranged on one side and the other side of the first upper heating module, respectively, with the same spacing from the first upper heating module.

In an embodiment, the second lower heating module and the third lower heating module can be respectively arranged on one side and the other side of the first lower heating module, respectively, with the same spacing from the first lower heating module.

In an embodiment, each of the first to third upper heating modules and the first to third lower heating modules can include one or more induction coils that generate the heating source in a direction corresponding to a direction of application of the driving power.

In an embodiment, the induction coil can be formed with an area equal to or greater than half the area of a lower surface of that heating module.

In an embodiment, the induction coil can be formed with a spiral structure.

In an embodiment, the induction coil can be formed with a copper tube structure into which coolant is introduced.

In an embodiment, the induction coil can have a capacity of 1 to 3 [uH].

In an embodiment, at least one pair of the first upper heating module and the first lower heating module, the second upper heating module and the second lower heating module, and the third upper heating module and the third lower heating module can be formed with the same induction coil.

In an embodiment, at least one pair of the first upper heating module and the first lower heating module, the second upper heating module and the second lower heating module, and the third upper heating module and the third lower heating module can have the induction coil connected by a single connecting line.

In an embodiment, the connecting line can be connected between a first power terminal of the upper heating module and a second power terminal of the lower heating module.

In an embodiment, one or more of the first upper heating module and the first lower heating module can have the induction coil formed in a first shape.

In an embodiment, at least one pair of the second upper heating module and the third upper heating module, and the second lower heating module and the third lower heating module can have the induction coil formed in a second shape different from the first shape.

In an embodiment, the power supply part can supply the driving power to each pair of the first upper heating module and the first lower heating module, the second upper heating module and the second lower heating module, and the third upper heating module and the third lower heating module.

In an embodiment, the power supply part can have a first supply terminal connected to a second power terminal of an upper heating module, and a second supply terminal connected to a first power terminal of a lower heating module to supply the driving power to each pair through the first supply terminal and the second supply terminal.

In an embodiment, the control part can control the supply of the driving power to vary one or more of a magnitude of the driving power supplied to each heating module, a frequency of the driving power, and a supply time period of the driving power.

In an embodiment, the control part can control the supply of the driving power to each pair of the first upper heating module and the first lower heating module, the second upper heating module and the second lower heating module, and the third upper heating module and the third lower heating module.

In an embodiment, the control part can determine, when the object to be heated is arranged in the arrangement section, state information of the object to be heated to control the supply of the driving power according to a result of the determination.

In an embodiment, the control part can detect a heating state of the object to be heated during heating of the object to be heated to control the supply of the driving power according to a result of the detection.

In an embodiment, the heating apparatus can further include a drive part that moves the positions of one or more pairs of the second upper heating module and the second lower heating module, and the third upper heating module and the third lower heating module, wherein the control part controls the drive part to move the positions of one or more pairs of the second upper heating module and the second lower heating module, and the third upper heating module and the third lower heating module to correspond to a size of the object to be heated.

The foregoing embodiment of the heating apparatus is not limited to those described above, and can also include embodiments that can be described in the detailed description below or inferred/derived from the detailed description.

### Advantageous Effects of Invention

According to an embodiment of the foregoing heating apparatus, an object to be heated can be divided into a plurality of heating zones to heat the plurality of heating zones with a plurality of heating modules, respectively, thereby having an effect of uniformly heating the object to be heated for each heating zone.

In particular, one or more of a current intensity, frequency, and heating time period applied to the heating module can be controlled differently for each heating zone, thereby having an effect of performing appropriate heating for each heating zone.

In addition, when each heating module is an induction heating module, the induction coil included in each heating module can be formed with a spiral structure to allow magnetic field lines to be evenly distributed to a heating target portion, thereby having an effect of more effectively performing heating of the object to be heated.

Beside, a coil structure of a heating module at a central portion can be different from that of a heating module at both side portions to allow directions of currents flowing between the two modules to be the same so as to prevent magnetic field lines from being transmitted to a gripper, which allows the gripper to be formed of a metallic material, thus having an effect of forming a thin thickness of the gripper.

Moreover, the positions of the heating modules on both sides can be moved, the positions of the modules can be arranged according to a size of the object to be heated, thereby performing appropriate heating corresponding to various sizes of the objects to be heated.

The effects according to the foregoing embodiment of the heating apparatus are not limited to those described above, and can also include effects that can be described in the detailed description below or inferred/derived from the detailed description.

### Brief Description of Drawings

FIG. 1 is a conceptual diagram of a conventional battery cell heating apparatus.
FIG. 2 is an exemplary diagram showing an example of an induction coil applied to a conventional battery cell heating apparatus.
FIG. 3 is an exemplary diagram showing a heating result of a heating surface of a battery cell according to an example of the induction coil shown in FIG. 2.
FIG. 4 is an exemplary diagram showing a heating result of a heating surface of a battery cell corresponding to regions 1 to 4 shown in FIG. 1.
FIG. 5 is a graph showing a temperature change in each of regions 1 to 4 shown in FIG. 1.
FIG. 6 is a configuration diagram of a heating apparatus according to an embodiment.
FIG. 7 is an exemplary diagram of a heating apparatus according to an embodiment.
FIG. 8 is a specific exemplary diagram of heating modules in a heating apparatus according to an embodiment.
FIG. 9 is an exemplary diagram of an induction coil of a heating apparatus according to an embodiment.
FIG. 10 is a specific exemplary diagram of heating modules according to an example of the induction coil shown in FIG. 9.
FIG. 11 is an exemplary diagram showing a specific connection example of heating modules in a heating apparatus according to an embodiment.
FIG. 12 is a conceptual diagram showing a direction of current according to the connection example shown in FIG. 11.
FIG. 13 is a block diagram showing a specific drive control configuration of heating modules in a heating apparatus according to an embodiment.

### Mode for the Invention

Hereinafter, embodiments disclosed in this specification will be described in detail with reference to the accompanying drawings, but in describing the embodiments disclosed in this specification, when it is determined that a detailed description of related known technologies can obscure the subject matter of the embodiments disclosed in this specification, the detailed description will be omitted.

Furthermore, the accompanying drawings are provided only for a better understanding of the embodiments disclosed in this specification and are not intended to limit technical concepts disclosed in this specification, and therefore, it should be understood that the accompanying drawings include all modifications, equivalents and substitutes within the concept and technical scope of the present disclosure.

A heating apparatus according to an embodiment refers to an apparatus that heats an object to be heated.

Here, the object to be heated can be a battery cell.

That is, the heating apparatus can be an apparatus for heating the battery cell.

The heating apparatus 100 can include a plurality of apparatuses for heating the battery cell.

The heating apparatus 100 includes an upper heating part 10, a lower heating part 20, a power supply part 30, and a control part 40, as shown in FIG. 6.

In the heating apparatus 100, the upper heating part 10 and the lower heating part 20 can each be an apparatus that performs heating on the object BC to be heated.

Each of the upper heating part 10 and the lower heating part 20 is arranged above and below an arrangement section IS where the object BC to be heated is arranged, respectively, to transfer a heating source serving as a basis for heating to the object BC to be heated.

According to this arrangement, the upper heating part 10 can be arranged above the arrangement section IS to transfer the heating source to an upper surface of the object BC to be heated, and the lower heating part 20 can be arranged below the arrangement section IS to transfer the heating source to a lower surface of the object BC to be heated.

Additionally, the upper heating part 10 can be arranged on a top thereof and the lower heating part 20 can be arranged on a bottom thereof to form the arrangement section IS between the upper heating part 10 and the lower heating part 20, and the object BC to be heated can be inserted and arranged into the arrangement section IS in a sliding manner.

Each of the upper heating part 10 and the lower heating part 20 can include a plurality of heating modules 11 to 13, 21 to 23 to perform heating on the object BC to be heated through the plurality of heating modules 11 to 13, 21 to 23.

Each of the plurality of heating modules 11 to 13, 21 to 23 can generate a heating source for heating the object BC to be heated based on driving power to transfer the heating source to a heating target portion of the object BC to be heated.

Each of the plurality of heating modules 11 to 13, 21 to 23 can include a generation source GS that generates the heating source based on the driving power to transfer the generated heating source to the heating target portion.

Here, the generation source GS can be a heater or an induction coil.

When the generation source GS is a heater, the heating source can be heat generated from the heater.

When the generation source GS is an induction coil, the heating source can be magnetic field lines (or magnetic field) generated from the induction coil.

Each of the upper heating part 10 and the lower heating part 20 can also include one or more apparatuses for performing heating on the object BC to be heated.

Each of the upper heating part 10 and lower heating part 20 can be controlled by the control part 40.

In the heating apparatus 100, the power supply part 30 can be an apparatus that performs power supply.

The power supply part 30 supplies driving power serving as a basis for generating the heating source to each of the upper heating part 10 and the lower heating part 20.

The power supply part 30 can supply the driving power to each of the plurality of heating modules 11 to 13, 21 to 23 included in each of the upper heating part 10 and the lower heating part 20.

Accordingly, the upper heating part 10 and the lower heating part 20 can receive the driving power from the power supply part 30 to be driven based on the driving power, thereby generating the heating source.

The power supply part 30 can also include one or more apparatuses for power supply.

The power supply part 30 can be controlled by the control part 40.

In the heating apparatus 100, the control part 40 can be an apparatus that performs drive control.

The control part 40 controls the supply of the driving power to control the driving of the upper heating part 10 and the lower heating part 20, respectively.

The control part 40 can control the driving of each of the upper heating part 10 and the lower heating part 20 by controlling the power supply part 30 to control the supply of the driving power to each of the plurality of heating modules 11 to 13, 21 to 23 included in each of the upper heating part 10 and the lower heating part 20.

The control part 40 can also include one or more apparatuses for driving control.

The control part 40 can perform control for each of the apparatuses included in the heating apparatus 100.

In the heating apparatus 100 including the upper heating part 10, the lower heating part 20, the power supply part 30, and the control part 40 as described above, the upper heating part 10 and the lower heating part 20 respectively includes the plurality of heating modules 11 to 13, 21 to 23 to heat each of a plurality of heating zones Z1 to Z3 in which the heating target portion of the object BC to be heated is divided into a plurality of zones.

That is, the heating apparatus 100 can divide the heating target portion into the plurality of heating zones Z1 to Z3 to perform heating for each of the plurality of heating zones Z1 to Z3.

Here, the plurality of heating zones Z1 to Z3 can be divided into at least 3 zones.

For example, it can be divided into a central portion Z1 including a longitudinal center of the arrangement section IS and both side portions Z2 and Z3 of the central portion Z1.

That is, the heating apparatus 100 can divide the heating target portion into at least three zones including the central portion Z1 and the both side portions Z2 and Z3 of the central portion Z1, and perform heating separately for each of the three zones.

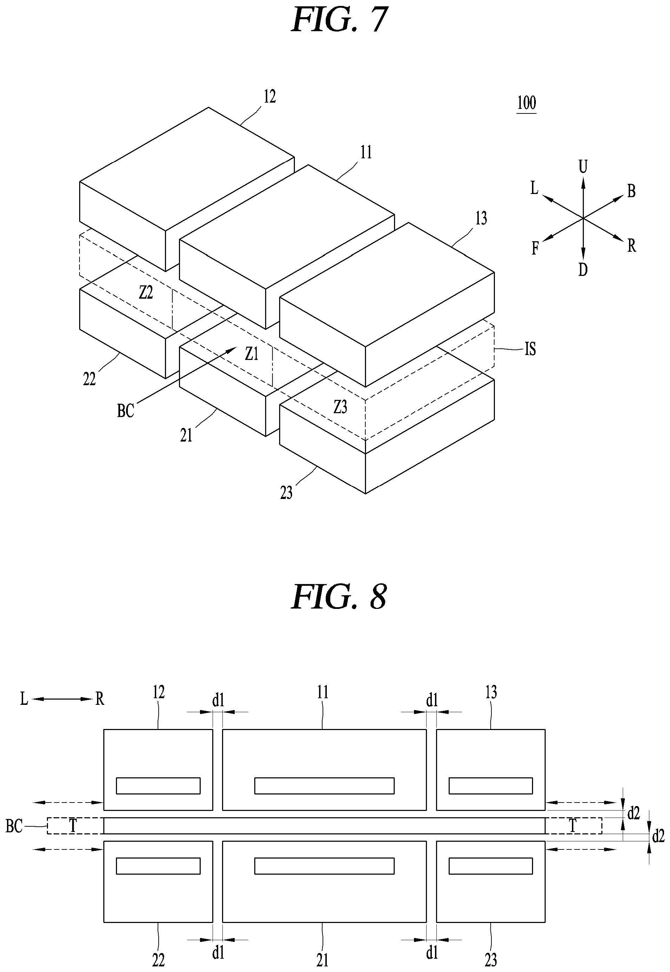

A specific example of the heating apparatus 100 including the plurality of heating modules 11 to 13, 21 to 23 to heat each of the plurality of heating zones Z1 to Z3 in which the heating target portion of the object BC to be heated is divided into a plurality of zones can be as shown in FIG. 7.

The upper heating part 10 includes a first upper heating module 11 that transfers the heating source from a top of the central portion Z1 including the longitudinal center of the arrangement section IS, a second upper heating module 12 that transfers the heating source from a top of the one side portion Z2 corresponding to one side of the central portion Z1, and a third upper heating module 13 that transfers the heating source from a top of the other side portion Z3 corresponding to the other side of the central portion Z1.

That is, the upper heating part 10 can have the first upper heating module 11 arranged above the central portion Z1 to transfer the heating source to a top of the central portion Z1, the second upper heating module 12 arranged above the one side portion Z2 to transfer the heating source to a top of the one side portion Z2, and the third upper heating module 13 arranged above the other side portion Z3 to transfer the heating source to a top of the other side portion Z3.

Accordingly, a top of the central portion Z1 can be heated by the first upper heating module 11, a top of the one side portion Z2 can be heated by the second upper heating module 12, and a top of the other side portion Z3 can be heated by the third upper heating module 13.

The lower heating part 20 includes a first lower heating module 21 that transfers the heating source from a bottom of the central portion Z1, a second lower heating module 22 that transfers the heating source from a bottom of the one side portion Z2, and a third lower heating module 23 that transfers the heating source from a bottom of the other side portion Z3.

That is, the lower heating part 20 can have the first lower heating module 21 arranged below the central portion Z1 to transfer the heating source to a bottom of the central portion Z1, the second lower heating module 22 arranged below the one side portion Z2 to transfer the heating source to a bottom of the one side portion Z2, and the third lower heating module 23 arranged below the other side portion Z3 to transfer the heating source to a bottom of the other side portion Z3.

Accordingly, a bottom of the central portion Z1 can be heated by the first lower heating module 21, a bottom of the one side portion Z2 can be heated by the second lower heating module 22, and a bottom of the other side portion Z3 can be heated by the third lower heating module 23.

As described above, in the heating apparatus 100, each of the first upper heating module 11 and the first lower heating module 21 can transfer the heating source to the central portion Z1 from each of a top and bottom of the central portion Z1, each of the second upper heating module 12 and the second lower heating module 22 can transfer the heating source to the one side portion Z2 from each of a top and bottom of the one side portion Z2, and each of the third upper heating module 13 and the third lower heating module 23 may transfer the heating source to the other side portion Z3 from each of a top and bottom of the other side portion Z3.

That is, the central portion Z1 of the object BC to be heated can be heated by the first upper heating module 11 and the first lower heating module 21, the one side portion Z2 can be heated by the second upper heating module 12 and the second lower heating module 22, and the other side portion Z3 can be heated by the third upper heating module 13 and the third lower heating module 23.

Meanwhile, although not shown in the drawing, the heating apparatus 100 can also be implemented in a shape in which each of the upper heating part 10 and the lower heating part 10 further includes additional heating modules in addition to the first to third upper heating modules 11 to 13 and the first to third lower heating modules 21 to 23.

For example, the heating apparatus 100 can include a fourth upper heating module on the left side of the second upper heating module 12, a fifth upper heating module on the right side of the third upper heating module 13, a fourth lower heating module on the left side of the second lower heating module 22, and a fifth lower heating module on the right side of the third lower heating module 23.

Alternatively, the second upper heating module 12 can include a second-first upper heating module and a second-second upper heating module, the third upper heating module 13 can include a third-first upper heating module and a third-second upper heating module, the second lower heating module 22 can include a second-first lower heating module and a second-second lower heating module, and the third lower heating module 23 can include a third-first lower heating module and a third-second lower heating module.

Alternatively, each of the first to third upper heating modules 11 to 13 and the first to third lower heating modules 21 to 23 can include a front heating module and a rear heating module that heat the front and rear sides, respectively.

That is, each of the upper heating part 10 and the lower heating part 20 can divide the heating target portion into at least three odd heating zones based on a length direction of the object BC to be heated so as to include at least three odd heating modules corresponding to each of the odd heating zones, respectively.

Hereinafter, for the convenience of explanation, an embodiment of the heating apparatus 100 will be described based on an example in which three heating modules are provided.

Meanwhile, one or more of the first upper heating module 11 and the first lower heating module 21 can include one or more grippers GPs for fixing the object BC to be heated arranged in the arrangement section IS.

That is, the object BC to be heated can be inserted and arranged in the arrangement section IS in a sliding manner, and then fixed by the gripper GP.

In this case, preferably, the first upper heating module 11 and the first lower heating module 21 can each include a pair of grippers GPs.

Additionally, the gripper GP can also be provided in the second upper heating module 12 and the second lower heating module 22, and in the third upper heating module 13 and the third lower heating module 23.

The gripper GP can be made of a non-metallic material or a metallic material.

That is, the heating apparatus 100 can form the gripper GP with the metallic material.

The gripper GP can be formed with a thickness within a reference thickness when formed of the non-metallic material, and formed with a thickness less than the reference thickness when formed of the metallic material.

That is, the gripper GP can be formed of the metal material to have a thickness thinner than that of the case formed of the non-metallic material.

In a conventional heating apparatus, when the gripper is formed of a metallic material, conduction and heat generation occur in the gripper due to the influence of a current flowing through the heating part and magnetic field lines generated from the heating part, which limits the durability of the gripper.

In order to solve this problem, when the gripper is formed of a non-metallic material, a thickness of the gripper had to be formed thick due to the limitation of the strength for fixed support of the object to be heated, and as a result, a spacing between the heating part and the object to be heated was widened, thereby inevitably reducing the heating effect.

In the heating apparatus 100, each of the upper heating part 10 and the lower heating part 20 is configured with a plurality of heating modules 11 to 13, 21 to 23 so as to reduce the influence of the heating part applied to the gripper, and thus the gripper GP can be formed of the metallic material.

A specific configuration of the upper heating part 10 and the lower heating part 20, each including the first to third upper heating modules 11 to 13 and the first to third lower heating modules 21 to 23, can be as shown in FIG. 8.

The first upper heating module 11 and the first lower heating module 21 can be symmetrical to each other with respect to the central portion Z1.

That is, the first upper heating module 11 and the first lower heating module 21 can be arranged symmetrically to each other with respect to the central portion Z1.

In addition, the first upper heating module 11 and the first lower heating module 21 can be formed with the same size.

The first upper heating module 11 and the first lower heating module 21 can be arranged above and below the central portion Z1, respectively, with the same spacing d2 from the object BC to be heated.

Accordingly, the first upper heating module 11 and the first lower heating module 21 are formed with the same size and arranged symmetrically with respect to the central portion Z1, and the spacing d2 between the object BC to be heated and each of the first upper heating module 11 and the first lower heating module 21 becomes the same, thereby allowing the heating source to be transferred in the same manner from each of the first upper heating module 11 and the first lower heating module 21 to the object BC to be heated.

The second upper heating module 12 and the second lower heating module 22 can be symmetrical to each other with respect to the one side portion Z2.

That is, the second upper heating module 12 and the second lower heating module 22 can be arranged symmetrically to each other with respect to the one side portion Z2.

In addition, the second upper heating module 12 and the second lower heating module 22 can be formed with the same size.

The second upper heating module 12 and the second lower heating module 22 can be arranged above and below the one side portion Z2, respectively, with the same spacing d2 from the object BC to be heated.

Accordingly, the second upper heating module 12 and the second lower heating module 22 are formed with the same size and arranged symmetrically with respect to the one side portion Z2, and the spacing d2 between the object BC to be heated and each of the second upper heating module 12 and the second lower heating module 22 becomes the same, thereby allowing the heating source to be transferred in the same manner from each of the second upper heating module 12 and the second lower heating module 22 to the object BC to be heated.

The third upper heating module 13 and the third lower heating module 23 can be symmetrical to each other with respect to the other side portion Z3.

That is, the third upper heating module 13 and the third lower heating module 23 can be arranged symmetrically to each other with respect to the other side portion Z3.

In addition, the third upper heating module 13 and the third lower heating module 23 can be formed with the same size.

The third upper heating module 13 and the third lower heating module 23 can be arranged above and below the other side portion Z3, respectively, with the same spacing d2 from the object BC to be heated.

Accordingly, the third upper heating module 13 and the third lower heating module 23 are formed with the same size and arranged symmetrically with respect to the other side portion Z3, and the spacing d2 between the object BC to be heated and each of the third upper heating module 13 and the third lower heating module 23 becomes the same, thereby allowing the heating source to be transferred in the same manner from each of the third upper heating module 13 and the third lower heating module 23 to the object BC to be heated.

In addition, the second upper heating module 12 and the third upper heating module 13 can be formed with the same size, and the second lower heating module 22 and the third lower heating module 23 can be formed with the same size.

That is, the second upper heating module 12 and the third upper heating module 13, and the second lower heating module 22 and the third lower heating module 23 can be formed with the same size.

Accordingly, the heating source can be transferred in the same manner from the one side portion Z2 and the other side portion Z3.

The first upper heating module 11, the second upper heating module 12, and the third upper heating module 13 can be arranged above the arrangement section IS with the same spacing d1 from the object BC to be heated.

That is, the first upper heating module 11 can be arranged at the same spacing d1 for each of the second upper heating module 12 and the third upper heating module 13.

Accordingly, the second upper heating module 12 and the third upper heating module 13 can be respectively arranged on one side and the other side of the first upper heating module 11 respectively, with the same spacing from the first upper heating module 11.

The first lower heating module 21, the second lower heating module 22, and the third lower heating module 23 can be placed at a bottom of the arrangement section IS with the same spacing d1 from the object BC to be heated.

That is, the first lower heating module 21 can be arranged at the same spacing d1 for each of the second lower heating module 22 and the third lower heating module 23.

Accordingly, the second lower heating module 22 and the third lower heating module 23 can be respectively arranged on one side and the other side of the first lower heating module 21 respectively, with the same spacing from the first lower heating module 21.

Consequently, the second upper heating module 12 and the second lower heating module 22, and the third upper heating module 13 and the third lower heating module 23 can be arranged symmetrically to each other with respect to the first upper heating module 11 and the first lower heating module 21.

Therefore, the heating of both side portions Z2 and Z3 of the central portion Z1 can be symmetrical to each other to be the same.

Each of the first to third upper heating modules 11 to 13 and the first to third lower heating modules 21 to 23 arranged in this manner can include one or more induction coils ICs that generate the heating source in a direction corresponding to a direction of application of the driving power.

In this case, preferably, each of the first to third upper heating modules 11 to 13 and the first to third lower heating modules 21 to 23 can include one or more of the induction coils IC.

Meanwhile, when each of the first to third lower heating modules 21 to 23 includes one or more of the induction coils ICs, a number of induction coils ICs included in each heating module can be the same.

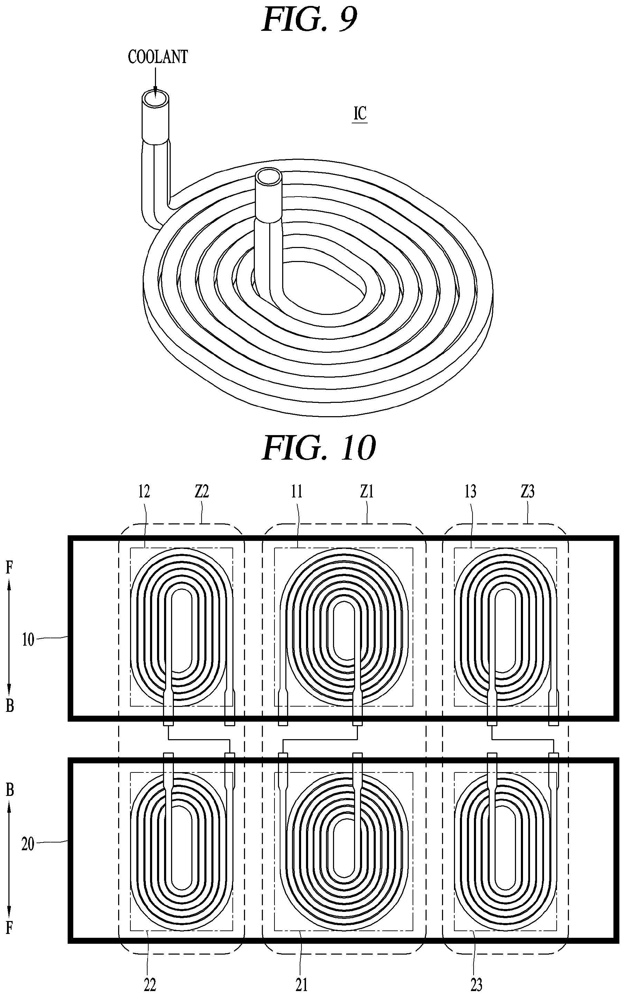

The induction coil IC can be formed with a spiral structure as shown in FIG. 9.

Accordingly, a gap between the coils can be minimized to maximize the generation and transmission of the heat source.

In addition, the induction coil IC can be formed with a copper tube structure into which coolant is introduced.

Accordingly, the cooling of the induction coil IC can be facilitated.

In addition, the conductivity of the induction coil IC can be facilitated by the introduction of the coolant.

Here, the coolant can be cooling water or cooling oil.

The induction coil IC can be formed with an area equal to or greater than half the area of a lower surface of that heating module, as shown in FIG. 10.

Accordingly, in each heating module, the heating source can be generated in an area equal to or greater than half the area of the lower surface.

The induction coil IC can have a capacitance of 1 to 3 [uH].

At least one pair of the first upper heating module 11 and the first lower heating module 21, the second upper heating module 12 and the second lower heating module 22, and the third upper heating module 13 and the third lower heating module 23 can be formed with the same induction coil IC.

That is, at least one pair of the first upper heating module 11 and the first lower heating module 21, the second upper heating module 12 and the second lower heating module 22, and the third upper heating module 13 and the third lower heating module 23 can have the induction coil IC formed with the same size and structure.

In this case, preferably, the induction coil IC included in each of the first upper heating module 11 and the first lower heating module 21 can be formed with the same structure, size, and inductance within a predetermined error range.

In addition, the induction coil IC included in each of the second upper heating module 12 and the second lower heating module 22, the third upper heating module 13 and the third lower heating module 23 can be formed with the same structure, size, and inductance within a predetermined error range.

Here, the predetermined error range can be ±0.5 to 1%.

Meanwhile, the induction coil IC of the first to third upper heating modules 11 to 13 and the induction coil IC of the first to third lower heating modules 21 to 23 can be included in each of the first to third upper heating modules 11 to 13 and the first to third lower heating modules 21 to 23 so as to generate the heating sources to face each other.

That is, the induction coil IC of the first to third upper heating modules 11 to 13 can generate the heating source in a downward direction of the first to third upper heating modules 11 to 13 to transfer the heating source to above the object BC to be heated, and the induction coil IC of the first to third lower heating modules 21 to 23 can generate the heating source in an upward direction of the first to third lower heating modules 21 to 23 to transfer the heating source to below the object BC to be heated.

One or more of the first upper heating module 11 and the first lower heating module 21 can have the induction coil IC formed in a first shape.

In this case, preferably, the induction coil IC of each of the first upper heating module 11 and the first lower heating module 21 can be formed with the same first shape.

In addition, one or more pairs of the second upper heating module 12 and the third upper heating module 13, and the second lower heating module 22 and the third lower heating module 23 can have the induction coil IC formed in a second shape different from the first shape.

In this case, preferably, the induction coil IC of each of the second upper heating module 12, the third upper heating module 13, the second lower heating module 22, and the third lower heating module 23 can be formed with the same second shape.

Here, the first shape and the second shape can refer to a shape in which the induction coil IC shapes the spiral structure.

For example, as shown in FIG. 10, the first shape can be a shape in which the induction coil IC is formed clockwise from a left outer edge, and the second shape can be a shape in which the induction coil IC is formed counterclockwise from a right outer edge.

Accordingly, the first upper heating module 11 and the first lower heating module 21 can be formed such that the induction coil IC is formed in the first shape, and a terminal connected to an outer edge portion of the induction coil IC is arranged on the left side, and the second upper heating module 12, the third upper heating module 13, the second lower heating module 22, and the third lower heating module 23 can be formed such that the induction coil IC is formed in the second shape, and a terminal connected to an outer edge portion of the induction coil IC is arranged on the right side.

At least one pair of the first upper heating module 11 and the first lower heating module 21, the second upper heating module 12 and the second lower heating module 22, and the third upper heating module 13 and the third lower heating module 23 can have the induction coil IC connected by a single connecting line.

That is, at least one pair of the first upper heating module 11 and the first lower heating module 21, the second upper heating module 12 and the second lower heating module 22, and the third upper heating module 13 and the third lower heating module 23 can be connected to the induction coil IC to apply the same driving power.

In this case, preferably, the induction coil IC of each pair of the first upper heating module 11 and the first lower heating module 21, the second upper heating module 12 and the second lower heating module 22, and the third upper heating module 13 and the third lower heating module 23 can be connected by a single connecting line.

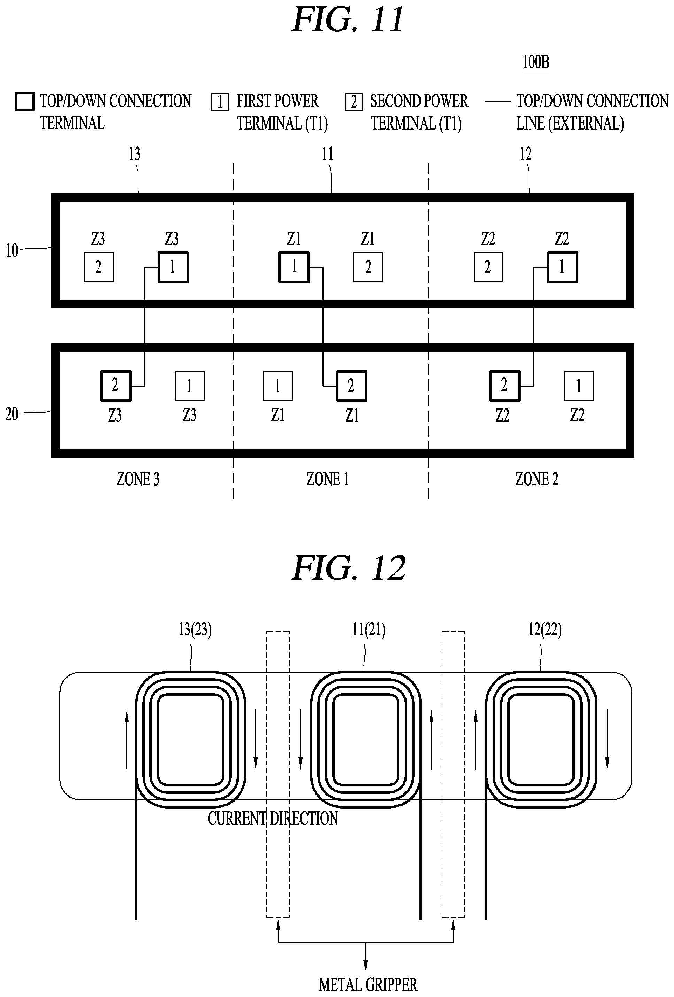

Such a connection between the first upper heating module 11 and the first lower heating module 21, the second upper heating module 12 and the second lower heating module 22, and the third upper heating module 13 and the third lower heating module 23 can be as shown in FIG. 11.

FIG. 11 shows an example of a rear surface 100B in which power terminals of each of the upper heating part 10 and the lower heating part 20 are formed, and the rear surface of each of the upper heating part 10 and the lower heating part 20 can be implemented in a shape different from that shown in FIG. 11.

Each of the first upper heating module 11 and the first lower heating module 21, the second upper heating module 12 and the second lower heating module 22, and the third upper heating module 13 and the third lower heating module 23 can be formed with a first power terminal T1 and a second power terminal T2.

The first power terminal T1 and the second power terminal T2 can be power terminals connected to the power supply part 30.

The first power terminal T1 and the second power terminal T2 can be power terminals for supplying the driving power to the induction coil IC in the power supply part 30.

Accordingly, the first power terminal T1 and the second power terminal T2 can be connected to both ends of the power supply part 30 and both ends of the induction coil IC.

The first power terminal T1 and the second power terminal T2 can be plus (+) and minus (-) terminals of the induction coil IC.

When the first power terminal T1 corresponds to a plus (+) terminal, the second power terminal T2 can correspond to a minus (-) terminal.

In addition, when the first power terminal T1 corresponds to a minus (-) terminal, the second power terminal T2 can correspond to a plus (+) terminal.

Meanwhile, the first power terminal T1 and the second power terminal T2 can be formed at positions offset to one side of the rear surface depending on the shape of the induction coil IC included in that heating module.

For example, as shown in FIG. 11, the first upper heating module 11 can be formed at a position where the first power terminal T1 and the second power terminal T2 are offset to the right side, and the second upper heating module 12 and the third upper heating module 13 can be formed at a position where the first power terminal T1 and the second power terminal T2 are offset to the left side.

In this case, the formation positions of the first power terminal T1 and the second power terminal T2 of the upper heating module and those of the first power terminal T1 and the second power terminal T2 of the lower heating module can be arranged in an alternating manner.

For example, the first upper heating module 11 can be formed at a position where the first power terminal T1 and the second power terminal T2 are offset to the right side, and the first lower heating module 21 can be formed at a position where the first power terminal T1 and the second power terminal T2 are offset to the left side.

The connecting line connecting the induction coils IC of at least one pair of the first upper heating module 11 and the first lower heating module 21, the second upper heating module 12 and the second lower heating module 22, and the third upper heating module 13 and the third lower heating module 23 can connect the first power terminal T1 of the upper heating module and the second power terminal T2 of the lower heating module.

In this case, the first power terminal T1 can be a minus (-) terminal of the induction coil IC, and the second power terminal T2 can be a plus (+) terminal of the induction coil IC.

When the second power terminal T2 of the first upper heating module 11 and the first power terminal T1 of the first lower heating module 21 are connected by the connecting line, the second power terminal T2 of the first upper heating module 11 and the first power terminal T1 of the first lower heating module 21 are connected to the power supply part 30, such that the driving power can be applied to the first power terminal T1 of the first lower heating module 21 and induced in the induction coil IC of the first lower heating module 21, and then induced in the induction coil IC of the first upper heating module 11 through the connecting line between the second power terminal T2 of the first lower heating module 21 and the first power terminal T1 of the first upper heating module 11.

Accordingly, the induction coil IC of the first lower heating module 21 may generate the heating source in an upward direction, and the induction coil IC of the first upper heating module 11 may generate the heating source in a downward direction, thereby performing the heating of the central portion Z1.

Additionally, when the second power terminal T2 of the second upper heating module 12 and the first power terminal T1 of the second lower heating module 22 are connected by the connecting line, the second power terminal T2 of the second upper heating module 12 and the first power terminal T1 of the second lower heating module 22 are connected to the power supply part 30, such that the driving power can be applied to the first power terminal T1 of the second lower heating module 22 and induced in the induction coil IC of the second lower heating module 22, and then induced in the induction coil IC of the second upper heating module 12 through the connecting line between the second power terminal T2 of the second lower heating module 22 and the first power terminal T1 of the second upper heating module 12.

Accordingly, the induction coil IC of the second lower heating module 22 can generate the heating source in an upward direction, and the induction coil IC of the second upper heating module 12 can generate the heating source in a downward direction, thereby performing the heating of the one side portion Z2.

Additionally, when the second power terminal T2 of the third upper heating module 13 and the first power terminal T1 of the third lower heating module 23 are connected by the connecting line, the second power terminal T2 of the third upper heating module 13 and the first power terminal T1 of the third lower heating module 23 are connected to the power supply part 30, such that the driving power is applied to the first power terminal T1 of the third lower heating module 23 and induced in the induction coil IC of the third lower heating module 23, and then induced in the induction coil IC of the third upper heating module 13 through the connecting line between the second power terminal T2 of the third lower heating module 23 and the first power terminal T1 of the third upper heating module 13.

Accordingly, the induction coil IC of the third lower heating module 23 may generate the heating source in an upward direction, and the induction coil IC of the third upper heating module 13 may generate the heating source in a downward direction, thereby performing the heating of the other portion Z3.

Meanwhile, depending on the shape and arrangement of the induction coil IC, the first power terminal T1 can be a plus (+) terminal of the induction coil IC, and the second power terminal T2 can be a minus (-) terminal of the induction coil IC.

In this way, by connecting the power terminals of the upper heating module and the lower heating module, directions of currents flowing between the induction coil IC of the heating module 11, 21 of the central portion Z1 and the induction coils IC of the heating modules 12, 22 and 13, 23 on both sides become the same as shown in FIG. 12 to cancel out a magnetic field at a position where the gripper GP is arranged.

Accordingly, the influence of the magnetic field on the gripper GP can be limited to prevent heating due to the influence of the magnetic field even when the gripper GP is formed of a metallic material.

Therefore, the driving of the upper heating module and the lower heating module can be unified so as to allow heating efficiencies of a top and bottom thereof to be the same, and the material of the gripper GP can be formed of a metallic material.

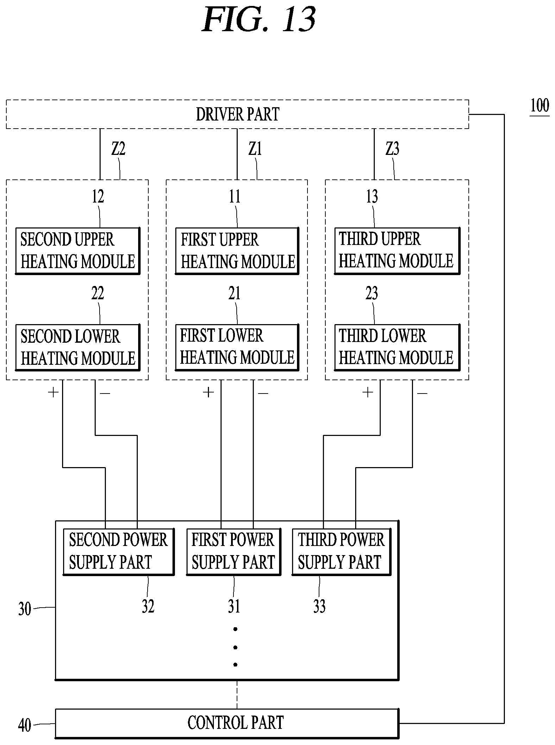

A specific driving control configuration of the heating apparatus 100 according to a configuration of the upper heating part 10 and the lower heating part 20 as described above can be as shown in FIG. 13.

The power supply part 30 can supply the driving power to each pair of the first upper heating module 11 and the first lower heating module 21, the second upper heating module 12 and the second lower heating module 22, and the third upper heating module 13 and the third lower heating module 23.

Accordingly, the power supply part 30 supplies the driving power to each pair of the first upper heating module 11 and the first lower heating module 21, the second upper heating module 12 and the second lower heating module 22, the third upper heating module 13 and the third lower heating module 23 arranged for each heating zone Z1 to Z3 to drive the plurality of heating modules 11 to 13, 21 to 23 for each heating zone Z1 to Z3.

The power supply part 30 can include, for example, a first power supply part 31 that supplies the driving power to the first upper heating module 11 and the first lower heating module 21, a second power supply part 32 that supplies the driving power to the second upper heating module 12 and the second lower heating module 22, and a third power supply part 33 that supplies the driving power to the third upper heating module 13 and the third lower heating module 23, thereby supplying the driving power to each pair through each of the first to third power supply parts 31 to 31.

Additionally, the power supply part 30 can further include, when there are additional heating zones in addition to the heating zones Z1 to Z3, an additional power supply part that supplies the driving power to a pair of heating modules corresponding to the additional heating zones.

The power supply part 30 can have a first supply terminal connected to a second power terminal T2 of an upper heating module and a second supply terminal connected to a first power terminal T1 of a lower heating module to supply the driving power to each pair through the first supply terminal and the second supply terminal.

Here, when the second power terminal T2 is a minus (-) terminal, the first supply terminal can be a minus (-) terminal of the power supply part 30, and the second supply terminal can be a plus (+) terminal of the power supply part 30.

In this case, the driving power can be induced through the induction coil IC of the lower heating module to the induction coil IC of the upper heating module.

In addition, when the second power terminal T2 is a plus (+) terminal, the first supply terminal can be a plus (+) terminal of the power supply part 30, and the second supply terminal can be a minus (-) terminal of the power supply part 30.

The power supply part 30 can supply the driving power to each pair of the first upper heating module 11 and the first lower heating module 21, the second upper heating module 12 and the second lower heating module 22, and the third upper heating module 13 and the third lower heating module 23 according to a control signal received from the control part 40.

The control part 40 can control the power supply part 30 by applying the control signal to the power supply part 30.

The control part 40 can control the power supply part 30 to control the driving of the upper heating part 10 and the lower heating part 20, respectively.

The control part 40 can control the driving of each of the upper heating part 10 and the lower heating part 20 by applying the control signal for the supply control of the driving power to the power supply part 30 to control the power supply part 30.

That is, the control part 40 can control the supply of the driving power supplied from the power supply part 30 to the plurality of heating modules 11 to 13, 21 to 23 to control the driving of each of the upper heating part 10 and the lower heating part 20.

The control part 40 can control the supply of the driving power to vary one or more of a magnitude of the driving power supplied to each of the plurality of heating modules 11 to 13, 21 to 23, a frequency of the driving power, and a supply time period of the driving power.

The control part 40 can divide a heating time of the object BC to be heated into a plurality of sections to control the supply of the driving power so as to allow one or more of a magnitude of the driving power, a frequency of the driving power, and a supply time period of the driving power to be supplied differently for each section.

For example, the frequency of the driving power source can be varied to a first frequency initially, and to a second frequency higher than the first frequency thereafter.

The control part 40 can control the supply of the driving power to each pair of the first upper heating module 11 and the first lower heating module 21, the second upper heating module 12 and the second lower heating module 22, and the third upper heating module 13 and the third lower heating module 23.

That is, the control part 40 can control the supply of the driving power supplied to the corresponding heating module for each heating zone Z1 to Z3.

Accordingly, by supplying the appropriate driving power to each of the heating zones Z1 to Z3, heating can be performed appropriately and efficiently for each of the heating zones Z1 to Z3.

The control part 40 can determine the state information of the object BC to be heated when the object BC to be heated is arranged in the arrangement section IS, and control the supply of the driving power according to a result of the determination.

Here, the state information can be information including one or more of a size, weight, thickness, material, and temperature of the object BC to be heated.

Accordingly, the control part 40 can control the driving power to be appropriately supplied in response to one or more of a size, weight, thickness, material, and temperature of the object BC to be heated.

The control part 40 can determine the state information through a sensor part (not shown) included in the heating apparatus 100.

In this case, the sensor part can include one or more sensors among a vision sensor, a weight sensor, an infrared sensor, and a temperature sensor capable of sensing one or more of a size, weight, thickness, material, and temperature of the object BC to be heated.

The control part 40 can also determine the state information through an input part (not shown) included in the heating apparatus 100.

The input part can be an input apparatus that receives a command for driving control of the heating apparatus 100 and input information of the state information.

The control part 40 can also determine the state information through a communication part (not shown) included in the heating apparatus 100.

The communication part can be a communication apparatus that interacts with the heating apparatus 100 or communicates with an external apparatus capable of communicating with the heating apparatus 100.

The control part 40 can detect the heating state of the object BC to be heated during heating of the object BC to be heated, and control the supply of the driving power according to a result of the detection.

Here, the heating state can include at least a temperature state.

In this case, the control part 40 can detect the temperature state through the temperature sensor included in the sensor part.

Accordingly, the control part 40 can control the driving power to be supplied appropriately according to the temperature state of the object BC to be heated.

For example, when the temperature of the one side portion Z2 is below a predetermined reference compared to the temperature of the other side portion Z3, one or more of a magnitude, frequency, and time period of the driving power applied to the second upper heating module 12 and the second lower heating module 22 can be increased to increase the heating of the one side portion Z2, or one or more of the magnitude, frequency, and time period of the driving power applied to the third upper heating module 13 and the third lower heating module 23 can be decreased to decrease the heating of the other side portion Z3.

Meanwhile, the heating apparatus 100 can further include the drive part 50.

The drive part 50 can move the positions of one or more pairs of the second upper heating module 12 and the second lower heating module 22, and the third upper heating module 13 and the third lower heating module 23.

In this case, the control part 40 can control the drive part 40 to move the positions of one or more pairs of the second upper heating module 12 and the second lower heating module 22, and the third upper heating module 13 and the third lower heating module 23 to correspond to a size of the object BC to be heated.

For example, as shown in FIG. 8, when a length of the object BC to be heated exceeds (T) both sides of the arrangement section IS, the second upper heating module 12 and the second lower heating module 22 can be moved to the left side (L), and the third upper heating module 13 and the third lower heating module 23 can be moved to the right side (R) by an amount corresponding to the excess length (T) to transfer the heating source to a portion corresponding to the excess length (T).

Accordingly, heating can be performed in correspondence with the length of the object BC to be heated.

Therefore, objects BCs with various lengths to be heated can be heated.

Although embodiments of the heating apparatus have been described so far, the described embodiments can be modified in various ways without departing from the scope of the present disclosure, and the scope of the present disclosure should not be limited to the described embodiments, but should be defined not only by the claims described below but also by equivalents of the claims.

### <Description of Symbols>

10: Upper heating part 20: Lower heating part
30: Power supply part 40: Control part
100: Heating apparatus

## Claims

1. A heating apparatus comprising:
an upper heating part and a lower heating part arranged above and below an arrangement section where an object to be heated is arranged, respectively, to transfer a heating source serving as a basis for heating to the object to be heated;
a power supply part that supplies driving power serving as a basis for generating the heating source to each of the upper heating part and the lower heating part; and
a control part that controls the supply of the driving power to control the driving of each of the upper heating part and the lower heating part,
wherein the upper heating part comprises:
a first upper heating module that transfers the heating source from a top of a central portion including a longitudinal center of the arrangement section;
a second upper heating module that transfers the heating source from a top of one side portion corresponding to one side of the central portion; and
a third upper heating module that transfers the heating source from a top of the other side portion corresponding to the other side of the central portion, and
wherein the lower heating part comprises:
a first lower heating module that transfers the heating source from a bottom of the central portion;
a second lower heating module that transfers the heating source from a bottom of the one side portion; and
a third lower heating module that transfers the heating source from a bottom of the other side portion.

2. The heating apparatus of claim 1, wherein one or more of the first upper heating module and the first lower heating module comprise:
one or more grippers that fix the object to be heated arranged in the arrangement section.

3. The heating apparatus of claim 2, wherein the gripper is made of a non-metallic or metallic material.

4. The heating apparatus of claim 3, wherein the gripper, when formed of the non-metallic material, is formed with a thickness within a reference thickness, and wherein the gripper, when formed of the metallic material, is formed with a thickness less than the reference thickness.

5. The heating apparatus of claim 1, wherein the first upper heating module and the first lower heating module are symmetrical to each other with respect to the central portion.

6. The heating apparatus of claim 1, wherein the first upper heating module and the first lower heating module are arranged above and below the central portion, respectively, with the same spacing from the object to be heated.

7. The heating apparatus of claim 1, wherein the second upper heating module and the second lower heating module are symmetrical to each other with respect to the one side portion.

8. The heating apparatus of claim 1, wherein the second upper heating module and the second lower heating module are arranged above and below the one side portion, respectively, with the same spacing from the object to be heated.

9. The heating apparatus of claim 1, wherein the third upper heating module and the third lower heating module are symmetrical to each other with respect to the other side portion.

10. The heating apparatus of claim 1, wherein the third upper heating module and the third lower heating module are arranged above and below the other side portion, respectively, with the same spacing from the object to be heated.

11. The heating apparatus of claim 1, wherein the first upper heating module, the second upper heating module, and the third upper heating module are arranged above the arrangement section with the same spacing from the object to be heated.

12. The heating apparatus of claim 1, wherein the first lower heating module, the second lower heating module, and the third lower heating module are arranged below the arrangement section with the same spacing from the object to be heated.

13. The heating apparatus of claim 1, wherein the second upper heating module and the third upper heating module are respectively arranged on one side and the other side of the first upper heating module, respectively, with the same spacing from the first upper heating module.

14. The heating apparatus of claim 1, wherein the second lower heating module and the third lower heating module are respectively arranged on one side and the other side of the first lower heating module, respectively, with the same spacing from the first lower heating module.

15. The heating apparatus of claim 1, wherein each of the first to third upper heating modules and the first to third lower heating modules comprises one or more induction coils that generate the heating source in a direction corresponding to a direction of application of the driving power.

16. The heating apparatus of claim 15, wherein the induction coil is formed with an area equal to or greater than half the area of a lower surface of that heating module.

17. The heating apparatus of claim 15, wherein the induction coil is formed with a spiral structure.

18. The heating apparatus of claim 15, wherein the induction coil is formed with a copper tube structure into which coolant is introduced.

19. The heating apparatus of claim 15, wherein the induction coil has a capacity of 1 to 3 [uH].

20. The heating apparatus of claim 15, wherein at least one pair of the first upper heating module and the first lower heating module, the second upper heating module and the second lower heating module, and the third upper heating module and the third lower heating module is formed with the same induction coil.

21. The heating apparatus of claim 15, wherein at least one pair of the first upper heating module and the first lower heating module, the second upper heating module and the second lower heating module, and the third upper heating module and the third lower heating module has the induction coil connected by a single connecting line.

22. The heating apparatus of claim 21, wherein the connecting line is connected between a first power terminal of the upper heating module and a second power terminal of the lower heating module.

23. The heating apparatus of claim 15, wherein one or more of the first upper heating module and the first lower heating module has the induction coil formed in a first shape, and
wherein at least one pair of the second upper heating module and the third upper heating module, and the second lower heating module and the third lower heating module has the induction coil formed in a second shape different from the first shape.

24. The heating apparatus of claim 1, wherein the power supply part supplies the driving power to each pair of the first upper heating module and the first lower heating module, the second upper heating module and the second lower heating module, and the third upper heating module and the third lower heating module.

25. The heating apparatus of claim 24, wherein the power supply part has a first supply terminal connected to a second power terminal of an upper heating module, and a second supply terminal connected to a first power terminal of a lower heating module to supply the driving power to each pair through the first supply terminal and the second supply terminal.

26. The heating apparatus of claim 1, wherein the control part controls the supply of the driving power to vary one or more of a magnitude of the driving power supplied to each heating module, a frequency of the driving power, and a supply time period of the driving power.

27. The heating apparatus of claim 1, wherein the control part controls the supply of the driving power to each pair of the first upper heating module and the first lower heating module, the second upper heating module and the second lower heating module, and the third upper heating module and the third lower heating module.

28. The heating apparatus of claim 1, wherein the control part determines, when the object to be heated is arranged in the arrangement section, state information of the object to be heated to control the supply of the driving power according to a result of the determination.

29. The heating apparatus of claim 1, wherein the control part detects a heating state of the object to be heated during heating of the object to be heated to control the supply of the driving power according to a result of the detection.

30. The heating apparatus of claim 1, further comprising:
a drive part that moves the positions of one or more pairs of the second upper heating module and the second lower heating module, and the third upper heating module and the third lower heating module,
wherein the control part controls the drive part to move the positions of one or more pairs of the second upper heating module and the second lower heating module, and the third upper heating module and the third lower heating module to correspond to a size of the object to be heated.
